# EUROPEAN PATENT SPECIFICATION

(11) **EP 2 573 439 B1**
(45) Date of publication and mention of the grant of the patent: **02.11.2016**
(21) Application number: 11425238.0
(22) Date of filing: 20.09.2011
(51) Int. Cl.: F16K 37/00, H01H 9/16, H01H 19/62

(54) **Switch box**
Schaltkasten
Boîte de commutation

(43) Date of publication of application: 27.03.2013
(73) Proprietor: Soldo S.r.l. Socio Unico, 25015 Desenzano del Garda (Brescia) (IT)
(72) Inventor: Soldo, Giovanni, I-25015 Desenzano del Garda (IT)
(74) Representative: Carangelo, Pierluigi

(56) References cited:
- EP-A1- 1 602 868
- EP-A1- 2 341 270
- WO-A1-2009/022264
- US-A1- 2009 071 554
- US-B1- 6 820 647

## Description

The present invention relates to a box switch, and in particular a switch box fitted with visual signalling means, such as an indicator for example, to provide a visual signal of the functioning condition of a device, such as a valve or actuator, operatively connected to the switch.

The prior switches, commonly known as switch boxes, are usually composed of a body and a cover and contain internally a rotating body or indicator operatively connected to the shaft of the valve or actuator contained in the body.

The rotating stem or shaft is for example used in connection with cams driving further devices, mechanical, magnetic, inductive, capacitive, reed switches, to an analogue meter or similar applications /devices.

The rotating parts are often fitted with visual indicators of the angular position of the valve or actuator shaft, so as to provide externally to the switch a visual indication of the functioning condition of the valve or actuator.

Such visual indicators are usually housed on the cover so as to be visible from outside the switch box.

In particular in the prior solutions the indicator is generally a disc or cap, joined in rotation to the shaft and fitted with a relative mask: the mask is fixed and acts as a fixed reference for the angular position of the indicator.

In the prior solutions the cover encloses, or entirely englobes, both the mask and the indicator: thereby protecting the mask and the indicator from external agents.

Such solution is intended in particular for applications where the switch has to operate in corrosive conditions which would end up damaging the indicator. An example of such solution is disclosed in document EP 2 341 270 A1.

Such solution has numerous drawbacks.

In fact, the solution of closing the indicator inside the cover increases the number of switch components and therefore assembly time and costs, as well as the overall dimensions of the switch.

Furthermore, the cover is made in plastic since it must be transparent to permit a rapid and clear view of the indicator from the outside.

Over time and under the effect of corrosive agents as well as UV rays (in outdoor applications) the plastics used tend inevitably to become opaque, practically making a rapid and clear view of the indicator from the outside impossible.

Furthermore, the volume of air trapped inside the cover tends, as external conditions vary, to create condensation. Such condensation again contributes to reducing visibility of the indicator from the outside.

The purpose of the present invention is to make a switch box which overcomes the drawbacks mentioned with reference to the prior art.

Such drawbacks are resolved by a switch box according to claim 1.

Other embodiments of the switch according to the invention are described in the subsequent claims.

Further characteristics and advantages of the present invention will be more clearly comprehensible from the description given below of a preferred and nonlimiting embodiment, wherein:
- figure 1 shows a perspective view in separate parts of a switch box of the prior art;
- figure 2 shows a perspective view in separate parts of a switch box according to one embodiment of the present invention;

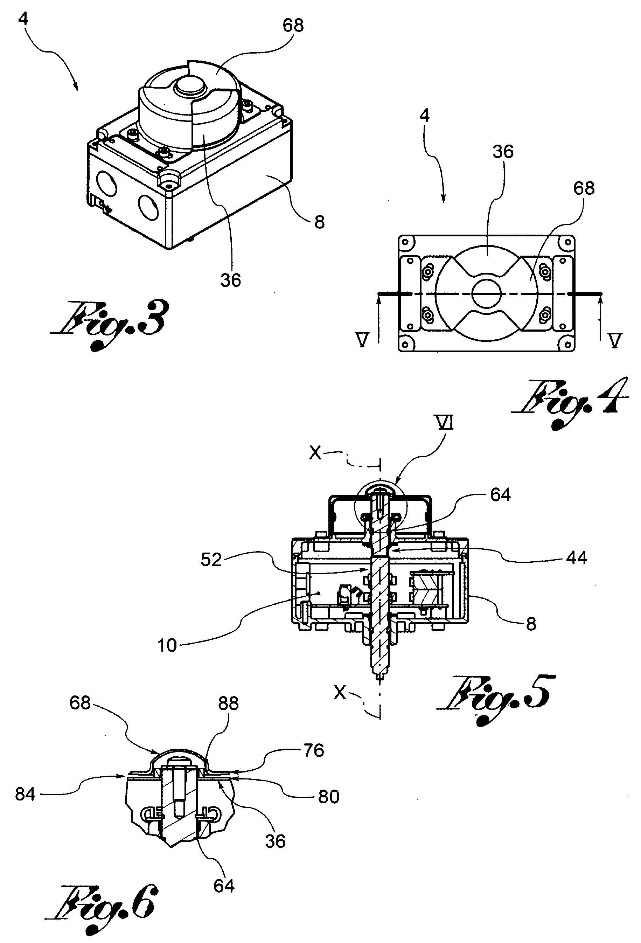

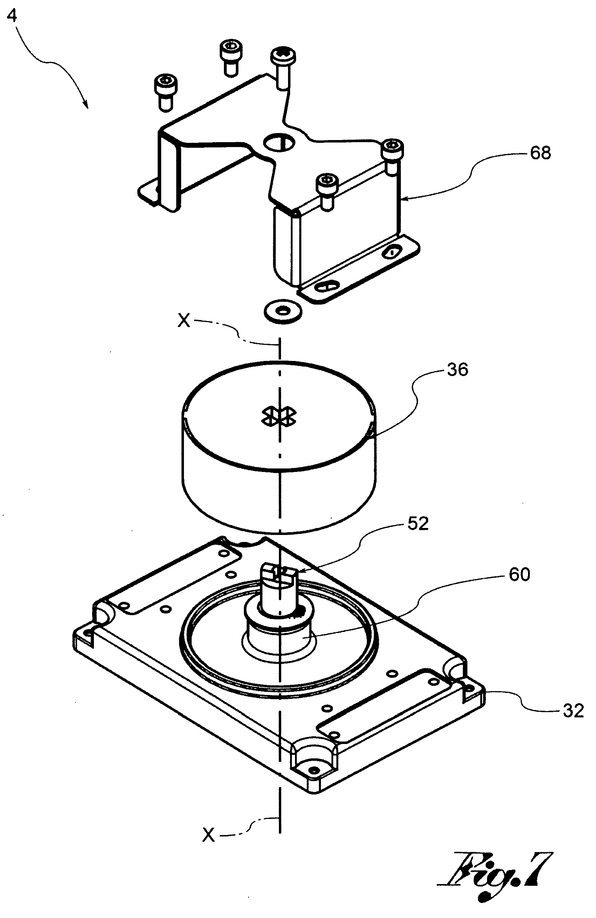

- figure 3 shows a perspective view of the switch in figure 2 in an assembled condition;
- figure 4 shows a ground view of the switch in figure 2;
- figure 5 shows a cross-section view of the switch in figure 2, along the plane V-V in figure 4;
- figure 6 shows the enlarged detail VI of figure 5;

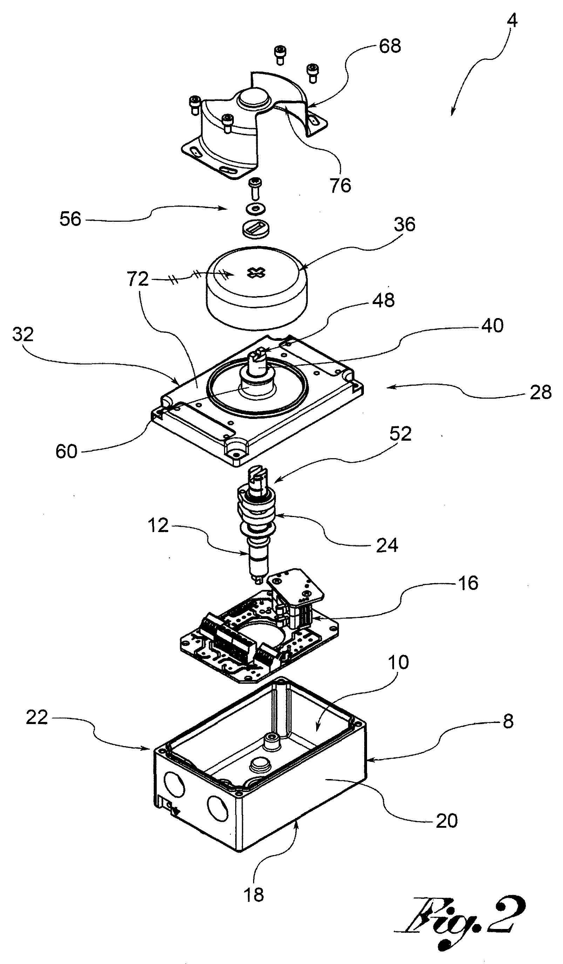

figure 2 shows a perspective view in separate parts of a cover of the present invention, according to one possible embodiment variation.

With reference to the aforementioned figures, reference numeral 4 globally denotes a switch comprising a body 8 which defines an inner space 10 housing so as to rotate a rotary shaft 12 operatively connected to a device 16 such as an electromechanical device signalling to an external station. The rotary shaft 12 may in turn be connected to a valve or actuator.

The shaft 12 rotates around a rotation axis X-X on the basis of the functioning of the external valve or actuator.

Preferably but not necessarily, the body 8 is made from metal or externally coated in metal.

According to one embodiment, the body comprises a bottom 18, a plurality of side walls 20 preferably positioned so as to form a closed perimeter, and an open end 22 opposite said bottom 18.

The shape, number of side walls and geometric dimensions of the body 8 may be of any type and should in no way be considered as limiting for the purposes of the present invention.

The shaft 12 may pass through the bottom 18 of the body 8 and may be supported by supports positioned inside and/or outside the body 8, in the known manner.

Cams 24 may be joined to the shaft 12 for the operation of further devices 16, such as for example electric signalling devices of switches, induction sensors, proximity sensors and the like. The type of devices listed above should be considered as simplifying and not as exhaustive.

In other words, the shaft 12 rotates with the valve or actuator placed outside, and by rotating acts as a switch, operating, for example by means of cams, a plurality of devices connected to the switch 4.

On the basis of the functioning or operative condition of the valve or actuator, the switch 4 can thereby operate a plurality of devices: the phasing between the switch and the valve or actuator is ensured by the shaft 12 which rotates joined to the valve or actuator.

The switch 4 further comprises a cover 28, joined to said body 8; preferably, the cover 28 is joined to the body 8 on the side opposite the open end 22 so as to close said inner space 10, on the side opposite the bottom 18.

Preferably, the cover 28 is made from metal or externally coated in metal.

The cover 28 is fitted with a plate 32, placed so as to close the body 8, and an indicator 36 rotating around said rotation axis X-X, the indicator 36 being joined in rotation to said shaft 12 by means of a stem 40, so as to permit a visual signalling of the angular position or operative condition of the rotary shaft 12.

The shape, number of side walls and geometric dimensions of the cover 28 may be of any type and should in no way be considered as limiting for the purposes of the present invention.

The indicator 36 may be of any shape; preferably it is axial symmetric and is disc-shaped.

Indications of the operative state of the device operatively connected to the shaft are shown on the indicator 36, said indications being shown using mechanical, chemical, electrochemical procedures or by means of affixing labels.

The stem 40 is for example a cylindrical body fitted with a coupling portion 44 and an attachment portion 48.

The coupling portion 44 engages on a corresponding free end 52 of the shaft 12 so as to join the stem 40 to the shaft 12 in rotation. The attachment portion 48 is fixed to the indicator for example by means of screw connections 56.

Said screw connection means 56 may comprise screws, pins and relative attachment washers with an anti-loosening function.

Preferably, the cover 28 comprises a sleeve 60, on the side opposite the inner space 10, said sleeve 60 housing and supporting so as to rotate the stem 40 which is in turn joined in rotation to the indicator 36.

The sleeve 60 projects perpendicular to the plate 32, for example from the side opposite the inner space 10, and is preferably joined to said plate 32.

At least one sealing gasket 64 is positioned between the sleeve 60 and the stem 40.

Advantageously, the cover 28 comprises a mask 68 joined directly to an upper wall 72 of the cover 28. opposite said inner space 10, the mask 68 being positioned so as to partially cover the indicator 36 and being joined to the cover 28 so as to constitute a fixed reference for the angular position of the indicator 36.

The mask 68 may be any size and shape: for example it may be a double arrow or hourglass shape (as shown in the drawings) but various different forms may also be envisaged.

The mask 68 may be made for example by shearing, folding and/or welding a metal sheet.

According to the invention, the mask 68 and the indicator 36 are open, that is to say in direct contact with the external environment and lacking a cover; furthermore the mask 68 and indicator 36 are made at least partially from metal.

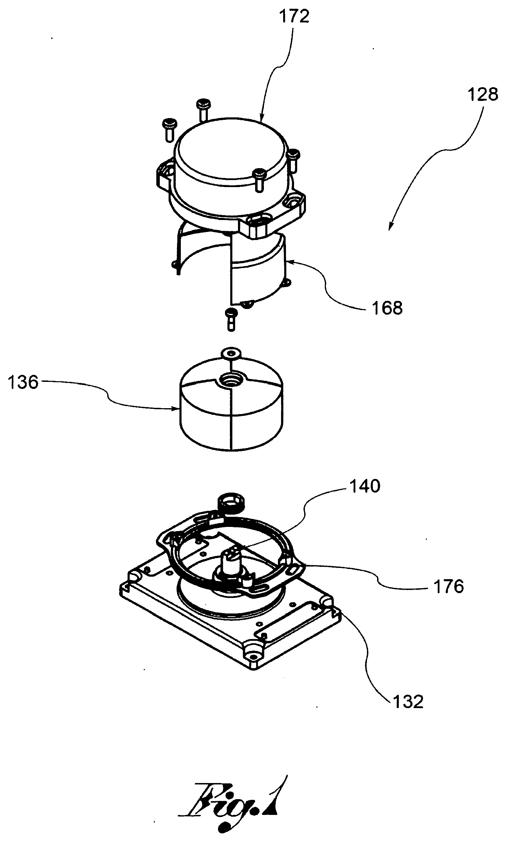

As may be seen from comparison with figure 1, relative to a solution of the prior art, the fact that the mask 68 and the indicator 36 are open constitutes a marked element of innovation compared to the prior art. In fact, in figure 1 a cover 128 comprising an indicator 136, attached to a relative stem 140, and a mask 168 partially covering the indicator 136 may be seen. Both the indicator 136 and the mask 168 are enclosed by a dome 172, in transparent plastic which is attached to the plate 132 of the cover 128 with the interposition of a gasket 176 to make it airtight.

According to a further embodiment of the present invention, The mask 68 and the indicator 36 are coated in corrosion-proof metal; alternatively the mask 68 and the indicator 36 are made entirely in corrosion-proof metal.

The indicator 36 is in direct contact with the stem 40 in turn connected to the shaft 12 which is connected to the earthed external actuator, so that the indicator 36 proves earthed and does not accumulate electrostatic charges.

Preferably, the mask 68 is in direct contact with the metallic structure of the cover 28, so as to be earthed together with the cover 28 and not accumulate electrostatic charges.

Preferably, the mask 68 is positioned coaxially to the indicator 36 so as to identify an air gap 84 between an inner wall 76 of the mask 68 and an outer wall 80 of the indicator 36 of 1 to 4mm.

According to one embodiment, a spacer 88 suitable to guarantee a minimum air gap 84 between the mask 68 and the indicator 36 so as to prevent any interference phenomena with the rotation of the indicator 36 is positioned between the stem 40 which the indicator 36 engages on and the mask 68.

As may be seen from the description, the switch according to the present invention makes it possible to overcome the drawbacks presented in relation to the prior art.

In fact, the switch has a reduced number of components compared to the switches of the prior art. For example, the switch of the present invention does not envisage any partition for boxing in the indicator and the relative sealing gasket between said partition and the cover is also avoided.

Furthermore, the switch according to the present invention is of reduced size and weight thanks to the abolition of the closure and boxing elements of the indicator. By way of example, the overall axial height of the cover of the present invention is approx. 25-30mm while the solutions of the prior art have an overall axial height of about 45mm. Axial height is taken to mean the maximum encumbrance of the cover in relation to a direction parallel to the rotation axis of the shaft.

The mechanical characteristics of the switch according to the invention are, in addition, unvaried over time. For example, the visibility of the indicator does not vary over time given the absence of cover screens which may deteriorate, yellow, become opaque over time as a result of normal ageing of the materials but also as a result of atmospheric agents and UV rays (in the case of switches for outdoor applications).

Furthermore, the switch according to the present invention is resistant to impact given that the metal mask is able to protect the indicator at least partially. Furthermore, following impact, unlike the closed solutions in plastic of the prior art, the visibility of the indicator would not be jeopardised.

In fact, the plastic of the prior solutions would crack deteriorating visibility of the indicator, while the mask of the switch according to the present invention would not be damaged or, even if it should be, would in any case allow both the visibility of the indicator and its correct rotation joined to the shaft.

In fact, several technical expedients such as the presence of the spacer and the definition of the minimum air gap are used to prevent possible seizures and/or abrasion due to deformations of the mask, to installation errors, to the inevitable production and assembly tolerances, but also to the possibility that dirt and impurities might limit or obstruct the rotation of the indicator.

The limitation of abrasion makes it possible to prevent the accumulation of heat due to friction and avoid the creation of electrical friction discharges which would make the switch unsuitable for use in ATEX environments.

The definition of a maximum as well as minimum air gap prevents large detritus, such as for example stones, from getting stuck between the mask and the indicator and constitutes a safety feature against the operator accidentally putting his/her finger in the air gap.

Furthermore, the switch according to the present invention does not present the risk of forming condensation given that both the indicator and the mask are in the open air and there is therefore no air trapped around the indicator.

Advantageously, the earth connection of the indicator and the mask prevents the presence of residual electrostatic charges which would immediately be discharged to earth by the switch.

It has been verified that the switch according to the present invention is able to function without any difficulty in an extremely wide temperature range of-60°C to +105°C.

A person skilled in the art may make numerous modifications and variations to the switch boxes described above so as to satisfy contingent and specific requirements, while remaining within the sphere of protection of the invention as defined by the following claims.

## Claims

1. Switch box (4) comprising
- a body (8) which defines an inner space (10) housing so as to rotate a rotary shaft (12) operatively connected to a device such as a valve or an actuator, wherein the shaft (12) rotates around a rotation axis (X-X),
- a cover (28) joined to said body (8), the cover (28) being fitted with a plate (32), placed so as to close the body (8), and an indicator (36) rotating around said rotation axis (X-X), the indicator (36) being joined in rotation to said shaft (12) by means of a stem (40), so as to permit a visual signalling of the angular position and/or operative condition of the rotary shaft (12), wherein
- the cover (28) comprises a mask (68) joined directly to an upper wall (72) of the cover (28), opposite said inner space (10), the mask (68) being positioned so as to partially cover the indicator (36) and being joined to the cover (28) so as to constitute a fixed reference for the angular position of the indicator (36), **characterised in that** the mask (68) and the indicator (36) are open, that is to say in direct contact with the external environment and **in that** they are made at least partially from metal and **in that** the indicator (36) is in direct contact with the stem (40) in turn in direct contact with the shaft (12) of the device (16) in turn connected to earth, so that the indicator (36) proves earthed and does not accumulate electrostatic charges.

2. Switch (4) according to claim 1, wherein the mask (68) and/or indicator (36) are coated in corrosion-proof metal.

3. Switch (4) according to claim 1 or 2, wherein the mask (68) and/or the indicator (36) are made entirely in corrosion-proof metal.

4. Switch (4) according to claim 1, 2 or 3, wherein the cover (28) and/or the body (8) is made from metal or externally coated in metal.

5. Switch (4) according to any of the previous claims, wherein the mask (68) is in direct contact with the metallic structure of the cover (28), so as to be earthed together with the cover (28) and not accumulate electrostatic charges.

6. Switch (4) according to any of the previous claims, wherein the cover (28) comprises a sleeve (60), on the side opposite the inner space (10), said sleeve (60) housing and supporting so as to rotate said stem (40) connected to the indicator (36) so as to rotate, wherein at least one sealing gasket (64) is positioned between the sleeve (60) and the stem (40).

7. Switch (4) according to any of the previous claims, wherein the mask (68) is positioned coaxially to the indicator (36) so as to identify an air gap of 1 to 4mm between an inner wall (76) of the mask (68) and an outer wall (80) of the indicator (36).

8. Switch (4) according to any of the previous claims, wherein a spacer (88) suitable to guarantee a minimum air gap (84) between the mask (68) and the indicator (36) so as to prevent any interference phenomena with the rotation of the indicator (36) is positioned between the stem (40) which the indicator (36) engages with and the mask (68).

9. Switch (4) according to any of the previous claims, wherein indications of the operative state of the device (16) operatively connected to the shaft (12) are shown on the indicator (36), said indications being shown using mechanical, chemical, electrochemical procedures or by means of affixing labels.

## Patentansprüche

1. Schaltkasten (4) umfassend
- ein Gehäuse (8), das einen inneren Freiraum (10) bildet, in dem eine Drehwelle (12) derart aufgenommen ist, dass diese sich dreht, wobei die Drehwelle (12) mit einer Vorrichtung, beispielsweise einem Ventil oder einem Steller, wirkmäßig verbunden ist, wobei die Welle (12) sich um eine Drehachse (X-X) dreht,
- eine Abdeckung (28), die mit dem Gehäuse (8) verbunden ist, wobei die Abdeckung (28) mit einer Platte (32) versehen ist, die derart angeordnet ist, dass sie das Gehäuse (8) verschließt, und einen Zeiger (36), der sich um die Drehachse (X-X) dreht, wobei der Zeiger (36) mittels eines Schafts (40) drehfest mit der Welle (12) verbunden ist, um eine visuelle Anzeige der Winkelposition und/oder des Betriebszustands der Drehwelle (12) zu ermöglichen,
wobei
- die Abdeckung (28) einen Skalenträger (68) umfasst, der unmittelbar an einer oberen dem inneren Freiraum (10) gegenüberliegenden Wand (72) der Abdeckung (28), befestigt ist, wobei der Skalenträger (68) derart angeordnet ist, dass der Zeiger teilweise abgedeckt ist, und derart mit der Abdeckung (28) verbunden ist, dass er einen festen Referenzpunkt für die Winkelposition des Zeigers (36) bildet,
**dadurch gekennzeichnet,**
**dass** der Skalenträger (68) und der Zeiger (36) offen liegen, d.h. sie mit der Außenumgebung direkt in Kontakt stehen, und
**dass** sie wenigstens teilweise aus Metall hergestellt sind und
**dass** der Zeiger (36) mit dem Schaft (40) direkt in Kontakt steht und der Schaft (40) wiederum direkt mit der Welle (12) der Vorrichtung (16), die wiederum geerdet ist, in Kontakt steht, so dass der Zeiger (36) geerdet ist und sich nicht elektrostatisch auflädt.

2. Schalter (4) gemäß Anspruch 1, wobei der Skalenträger (68) und/oder der Zeiger (36) mit einem korrosionsbeständigen Metall beschichtet ist.

3. Schalter (4) gemäß Anspruch 1 oder 2, wobei der Skalenträger (68) und/oder der Zeiger (36) vollständig aus einem korrosionsbeständigen Metall hergestellt ist.

4. Schalter (4) gemäß Anspruch 1, 2 oder 3, wobei die Abdeckung (28) und/oder das Gehäuse (8) aus Metall hergestellt oder außen mit Metall beschichtet ist.

5. Schalter (4) nach einem der vorangehenden Ansprüche, wobei der Skalenträger (68) mit dem Metallaufbau der Abdeckung (28) direkt in Kontakt steht, so dass er mit der Abdeckung (28) geerdet ist und sich nicht elektrostatisch auflädt.

6. Schalter (4) nach einem der vorangehenden Ansprüche, wobei die Abdeckung (28) an der dem inneren Freiraum (10) gegenüberliegenden Seite eine Hülse (60) umfasst, wobei die Hülse (60) den Schaft (40) derart aufnimmt und abstützt, dass der mit dem Zeiger (36) verbundene Schaft (40) sich dreht, wobei wenigstens eine Dichtung (64) zwischen der Hülse (60) und dem Schaft (40) angeordnet ist.

7. Schalter (4) nach einem der vorangehenden Ansprüche, wobei der Skalenträger (68) koaxial zu dem Zeiger (36) derart angeordnet ist, dass ein Luftspalt von 1 bis 4 mm zwischen einer Innenwand (76) des Skalenträgers (68) und einer Außenwand (80) des Zeigers (36) gebildet ist.

8. Schalter (4) nach einem der vorangehenden Ansprüche, wobei ein Abstandshalter (88) zwischen dem Schaft (40), der mit dem Zeiger (36) in Eingriff ist, und dem Skalenträger (68) angeordnet ist, der zum Sicherstellen eines minimalen Luftspalts (84) zwischen dem Skalenträger (68) und dem Zeiger (36) geeignet ist, um jegliche Interferenzerscheinungen bei der Drehung des Zeigers (36) zu verhindern.

9. Schalter (4) nach einem der vorangehenden Ansprüche, wobei Anzeigen des Betriebszustands der Vorrichtung (16), die mit der Welle (12) wirkmäßig verbunden ist, auf dem Zeiger (36) dargestellt sind, wobei die Anzeigen mittels mechanischer, chemischer, elektrochemischer Vorgänge oder mittels Aufbringen von Schildern dargestellt sind.

## Revendications

1. Boîte de commutation (4) comprenant
- un corps (8) qui définit un espace intérieur (10) logeant, de manière à le faire tourner, un arbre rotatif (12) fonctionnellement connecté à un dispositif tel qu'un clapet ou un actionneur, dans laquelle l'arbre (12) tourne autour d'un axe de rotation (X-X),
- un couvercle (28) relié audit corps (8), le couvercle (28) étant équipé d'une plaque (32), placée de manière à fermer le corps (8), et d'un indicateur (36) tournant autour dudit axe de rotation (X-X), l'indicateur (36) étant relié en rotation audit arbre (12) à l'aide d'une tige (40), de manière à permettre une signalisation visuelle de la position angulaire et/ou de l'état actif de l'arbre rotatif (12),
dans laquelle
- le couvercle (28) comprend un masque (68) relié directement à une paroi supérieure (72) du couvercle (28), à l'opposé dudit espace intérieur (10), le masque (68) étant positionné de manière à couvrir partiellement l'indicateur (36) et étant relié au couvercle (28) de manière à constituer une référence fixe pour la position angulaire de l'indicateur (36), **caractérisée en ce que** le masque (68) et l'indicateur (36) sont ouverts, c'est-à-dire en contact direct avec l'environnement externe et **en ce qu'**ils sont fabriqués au moins partiellement à partir du métal et **en ce que** l'indicateur (36) est en contact direct avec la tige (40) à son tour en contact direct avec l'arbre (12) du dispositif (16) connecté à son tour à la terre, de telle sorte que l'indicateur (36) s'avère mis à la terre et n'accumule pas de charges électrostatiques.

2. Commutateur (4) selon la revendication 1, dans lequel le masque (68) et/ou l'indicateur (36) sont revêtus d'un matériau anticorrosion.

3. Commutateur (4) selon la revendication 1 ou 2, dans lequel le masque (68) et/ou l'indicateur (36) sont entièrement fabriqués à partir de métal anticorrosion.

4. Commutateur (4) selon la revendication 1, 2 ou 3, dans lequel le couvercle (28) et/ou le corps (8) sont fabriqués à partir de métal ou extérieurement revêtus du métal.

5. Commutateur (4) selon l'une quelconque des revendications précédentes, dans lequel le masque (68) est en contact direct avec la structure métallique du couvercle (28), de manière à être mis à la terre avec le couvercle (28) et à ne pas accumuler de charges électrostatiques.

6. Commutateur (4) selon l'une quelconque des revendications précédentes, dans lequel le couvercle (28) comprend un manchon (60), sur le côté opposé à l'espace intérieur (10), ledit manchon (60) logeant et supportant, de manière à la faire tourner, ladite tige (40) connectée à l'indicateur (36) de manière à tourner, dans lequel au moins un joint d'étanchéité (64) est positionné entre le manchon (60) et la tige (40).

7. Commutateur (4) selon l'une quelconque des revendications précédentes, dans lequel le masque (68) est positionné de manière coaxiale à l'indicateur (36) de façon à identifier un intervalle libre de 1 à 4 mm entre une paroi intérieure (76) du masque (68) et une paroi extérieure (80) de l'indicateur (36).

8. Commutateur (4) selon l'une quelconque des revendications précédentes, dans lequel un élément d'espacement (88) approprié pour garantir un intervalle libre minimum (84) entre le masque (68) et l'indicateur (36) de manière à empêcher tout phénomène d'interférence avec la rotation de l'indicateur (36) est positionné entre la tige (40) avec laquelle l'indicateur (36) s'engage et le masque (68).

9. Commutateur (4) selon l'une quelconque des revendications précédentes, dans lequel des indications de l'état actif du dispositif (16) fonctionnellement connecté à l'arbre (12) sont présentées sur l'indicateur (36), lesdites indications étant présentées à l'aide de procédures mécaniques, chimiques, électrochimiques ou au moyen d'étiquettes d'application.
